Europäisches Patentamt

European Patent Office

Office européen des brevets

(11) Veröffentlichungsnummer: **0 119 490**
A1

(12) **EUROPÄISCHE PATENTANMELDUNG**

(21) Anmeldenummer: 84101683.5

(22) Anmeldetag: 17.02.84

(51) Int. Cl.³: **G 02 B  5/16**, G 02 B  5/172,
C 03 C  25/00

(30) Priorität: 22.02.83  DE 3306551

(43) Veröffentlichungstag der Anmeldung: 26.09.84
Patentblatt 84/39

(84) Benannte Vertragsstaaten: **AT BE CH DE FR GB IT LI NL
SE**

(71) Anmelder: **Siemens Aktiengesellschaft, Berlin und
München Wittelsbacherplatz 2, D-8000 München 2 (DE)**

(72) Erfinder: **Mayr, Ernst, Ing. grad., Wernbergstrasse 5,
D-8130 Starnberg (DE)**

(54) **Vorrichtung zur Herstellung eines Lichtwellenleiterelementes.**

(57) Zur Herstellung eines Lichtwellenleiterelementes, das
aus einem, mit einer Polsterschicht (PO) versehenen faserförmigen Lichtwellenleiter (LW), einer nachfolgenden Gleitschicht (GS) und einer mit einem Extruder (EX) aufgebrachten
Außenhülle (AH) aufgebaut ist, wird eine Druckkammer (DK)
verwendet, welche der Aufbringung der Gleitschicht (GS)
dient. Der gepolsterte Lichtwellenleiter (LWP) wird durch die
Druckkammer (DK) hindurchgeführt, die am Ausgang mit
einem angesetzten Druckrohr mit entsprechendem Innendurchmesser versehen ist. Dieses Druckrohr reicht etwa bis
zum Ende des Reckkegels (RK) des aus dem Extruder (EX)
austretenden Materials der Außenhülle (AH).

SIEMENS AKTIENGESELLSCHAFT       Unser Zeichen
Berlin und München               VPA 83 P 4 0 1 3

Vorrichtung zur Herstellung eines Lichtwellenleiterelementes

Die Erfindung betrifft eine Vorrichtung zur Herstellung eines Lichtwellenleiterelementes, das aus einem mit einer Polsterschicht versehenen faserförmigen Lichtwellenleiter, einer nachfolgenden Gleitschicht besteht und bei der ein Extruder zur Aufbringung der Außenhülle vorgesehen ist.

Eine Vorrichtung dieser Art ist aus der DE-OS 30 11 009 bekannt, wobei die Aufbringung der Gleitschicht mit einer Fülltrompete erfolgt. Um eine möglichst weitgehende mechanische Entkopplung zwischen der relativ steifen Außenhülle und dem gepolsterten Lichtwellenleiter mittels der Gleitschicht zu erhalten, muß gewährleistet werden, daß die Gleitschicht stets in ausreichender Stärke und gleichmäßig auf den gepolsterten Lichtwellenleiter aufgebracht wird. Diese Gleitschicht besteht zweckmäßig aus dem pastenartigen, jedoch nicht tropfenden oder fließenden Material, welches verhindert, daß Kräfte z.B. beim Schrumpfungsprozeß nach der Herstellung oder bei der Verlegung auf den gepolsterten Lichtwellenleiter von außen her übertragen werden. Die Gleitschicht wirkt somit als Trennschicht und ermöglicht unabhängige Bewegungen des gepolsterten Lichtwellenleiters gegenüber der Außenhülle und umgekehrt. Bei der bekannten Vorrichtung wird die Aufbringung der Füllmasse mittels einer Fülltrompete vorgenommen, die

Jb 1 Kom / 18.02.1983

vor dem Extruder angeordnet ist, durch den die Außenhülle aufgebracht wird. Es ergibt sich dabei jedoch ein größerer Bereich, in dem die als Gleitschicht dienende Füllmasse in ihrer Lage nicht weiter gehalten wird, bevor schließlich die Schutzhülle aufgebracht wird. Da die Füllmasse relativ weich z.B. pasten- oder wachsartig ausgebildet sein soll, kann es im Übergangsbereich zwischen dem Ende der Fülltrompete und dem Ausgang des Extruders zu Lageänderungen bei dem Material der Gleitschicht kommen, so daß es Schwierigkeiten bereitet, die gewünschten Eigenschaften der Gesamtanordnung stets mit Sicherheit zu gewährleisten.

Der vorliegenden Erfindung liegt die Aufgabe zugrunde, eine Vorrichtung der eingangs genannten Art derart weiterzubilden, daß mit geringem Aufwand eine zuverlässige, gleichmäßige und auch für hohe Fertigungsgeschwindigkeiten geeignete Aufbringung der Gleitschicht gewährleistet werden kann. Gemäß der Erfindung wird dies dadurch erreicht, daß eine Druckkammer für die Aufbringung der als Gleitschicht dienenden Füllmasse vorgesehen ist, durch die der gepolsterte Lichtwellenleiter hindurchgeführt ist und die am Ausgang mit einem angesetzten Druckrohr versehen ist, dessen Innenradius um die gewünschte Wandstärke der Gleitschicht größer gewählt ist als der Radius des gepolsterten Lichtwellenleiters, und daß das Druckrohr etwa bis zum Ende des Reckkegels des aus dem Extruder austretenden Materials der Außenhülle reicht.

Durch die Verwendung einer Druckkammer anstelle z.B. einer Fülltrompete, läßt sich eine gleichmäßigere und allseitige (d.h. auch blasenfreie) Beschichtung des gepolsterten Lichtwellenleiters mit der Gleitschicht sicherstellen. Das so erhaltene, mit der Gleitschicht versehene strangförmige Gut wird dann durch das angesetzte Druckrohr hindurchgeführt, so daß bei geringem

0119490

Materialverbrauch stets sichergestellt ist, daß eine ausreichend starke und gleichmäßige Gleitschicht auf dem gepolsterten Lichtwellenleiter aufgetragen wird. Der Übergangsbereich zwischen dem Ende des Druckrohres bis zu dem Zutritt der aufschrumpfenden Außenhülle ist so klein, daß hier unerwünschte Veränderungen der Lage oder der Gleichmäßigkeit der Gleitschicht praktisch nicht mehr auftreten können. Dies wird dadurch erreicht, daß das Druckrohr durch den Extruder hindurch bis etwa zum Ende des Reckkegels weitergeführt wird, den die vom Extruder austretende Außenhülle bildet.

Weiterbildungen der Erfindung sind in den Unteransprüchen wiedergegeben.

Die Erfindung wird nachfolgend anhand einer Zeichnung näher erläutert, in der ein Ausführungsbeispiel einer erfindungsgemäßen Vorrichtung dargestellt ist. Als Ausgangsmaterial wird ein gepolsterter Lichtwellenleiter LWP verwendet, der, wie aus der oberen vergrößerten Querschnittsdarstellung ersichtlich ist, aus einem faserförmigen Lichtwellenleiter LW besteht, auf den eine Polsterschicht PO aufgebracht wird. Ausgehend von Lichtwellenleiterfasern im Durchmesserbereich von etwa 125 $\mu$m werden Polsterschichten PO solcher Wandstärke aufgebracht, daß der gepolsterte Lichtwellenleiter LWP außen Durchmesser zwischen 250 $\mu$m und 500 $\mu$m aufweist. Die Polsterschicht PO ist also ausreichend dick gewählt, um einen guten Schutz des empfindlichen Lichtwellenleiters LW zu gewährleisten. Für die Polsterschicht werden zweckmäßig weiche, elastische Materialien wie z.B. Silikongummi oder dergleichen verwendet, die etwa die Eigenschaften eines elastischen Schaumstoffmaterials aufweisen.

Der gepolsterte Lichtwellenleiter LWP wird in eine Druckkammer DK eingeführt, die als Hohlzylinder ausge-

0119490

bildet ist und mit einer Füllmasse FM gefüllt ist. Die Zuführung dieser Füllmasse FM erfolgt von einem Druckkessel DF her, der die evakuierte, d.h. bläschenfreie Füllmasse enthält. Über eine Zahnradpumpe ZP und einen Druckschlauch DS wird die Füllmasse FM in das Innere der Druckkammer DK eingepreßt, deren Länge zwischen etwa 1 cm und 5 cm gewählt wird. Die Füllmasse FM ist so ausgebildet, daß sie im Endzustand etwa zähflüssigen Charakter aufweist, also eine pastenförmige Konsistenz. Dies kann beispielsweise dadurch erreicht werden, daß die Füllmasse FM einen hochmolekularen Anteil (z.B. in Form von Polyisobutylen oder Polybuten), einen ölhaltigen Anteil (z.B. in Form von Paraffinöl) und einen thixotropierenden Anteil (z.B. ultrafeine Kieselsäure) enthält.

Die gesamte Vorrichtung arbeitet zweckmäßig in vertikaler Richtung, d.h. der Durchlauf des zu verarbeitenden gepolsterten Lichtwellenleiters LWP erfolgt von oben nach unten. Zur Einführung des gepolsterten Lichtwellenleiters LWP ist ein Einlaufrohr ER vorgesehen, das an der oberen Stirnseite der Druckkammer DK angebracht ist und sich über eine gewisse Länge in das Innere der Druckkammer DK erstreckt. Dadurch wird verhindert, daß allzuviel des unter Druck stehenden Füllmaterials FM nach oben austritt. Die Länge dieses Einlaufrohres ER wird vorteilhaft zwischen 0,5 cm und 2 cm gewählt. Anstelle eines Einlaufrohres ER kann auch ein Einlaufnippel Verwendung finden. Der Druck der Füllmasse im Inneren der Druckkammer beträgt etwa 70 bis 350 bar. Um austretende Füllmasse FM auffangen zu können, kann ein Trichter TR mit einer entsprechenden Absaugleitung AL auf die Druckkammer DK aufgesetzt werden.

Am unteren Ende ist die Druckkammer DK in Form eines Einlauftrichters ET verjüngt, wobei am Ausgang der Druckkammer DK ein Druckrohr DR vorgesehen ist. Der Radius dieses Rohres DR ist um soviel größer gewählt als der Radius des gepolsterten Lichtwellenleiters LWP, daß die in Form der Füllmasse FM aufzutragende Gleitschicht GS die gewünschte Wandstärke erhält. Das Druckrohr DR ist so lang ausgebildet, daß es durch die Eintrittsöffnung des Extruderkopfes EK eines Extruders EX hindurchreicht, aus dem in Form eines Reckkegels RK das Material der Außenhülle AH austritt . Das stirnseitige Ende des Druckrohres DR befindet sich etwa dort, wo der Reckkegel RK im wesentlichen auf den gewünschten Außendurchmesser der Außenhülle AH heruntergereckt ist, also nur noch eine geringfügige Schrumpfung eintritt.

Die Länge des angesetzten Druckrohres DR liegt vorteilhaft etwa zwischen 5 cm und 10 cm. Es sollte sichergestellt werden, daß der Druck, der im Inneren der Druckkammer DK herrscht, an der Austrittsöffnung des Druckrohres DR völlig abgebaut ist. Es bildet sich dort also kein Austrittswulst oder dergleichen. Die Viskosität der Füllmasse FM für die Bildung der Gleitschicht wird so gewählt, daß die Gleitschicht nach dem Austritt aus dem Druckrohr DR formstabil auf dem gepolsterten Lichtwellenleiter LWP gehalten bleibt.

Auch bei entsprechend weichem pastenförmigem Füllmaterial FM bleibt somit die Gleitschicht GS gleichmäßig und allseitig an dem gepolsterten Lichtwellenleiter LWP haften, weil der Übergangsbereich zwischen dem stirnseitigen Ende des Druckrohres DR und dem Hinzutritt der gereckten und damit im Durchmesser schrumpfenden Außenhülle AH praktisch vernachlässigbar klein gehalten werden kann. Das Material der Außenhülle AH sollte mit seiner Innenfläche das Druckrohr DR zweckmäßig gerade noch nicht berühren, jedoch ihm möglichst nahe benachbart sein.

Das in der Verlängerung am Ausgang ebenfalls vergrößert dargestellte fertige Lichtwellenleiterelement weist eine gleichmäßig und auch bei hohen Fertigungsgeschwindigkeiten jegliche Haftung zwischen der Außenhülle AH und dem gepolsterten Lichtwellenleiter LWP vermeidende Gleit- und Trennschicht GS auf. Die Wandstärke dieser Trennschicht kann vorteilhaft zwischen 50 /um und 150 /um betragen, während für die Außenhülle AH Wandstärken etwa zwischen 100 /um und 250 /um zweckmäßig sind. Die Außenhülle AH besteht aus relativ steifem Material, das die gepolsterte Lichtwellenleiter LWP bereits von Haus aus in gewissem Umfang gegen mechanische Beanspruchungen von außen her schützt. Zugleich wird aber durch die Gleitschicht GS eine völlig mechanische Entkopplung zwischen der Außenhülle AH und dem gepolsterten Lichtwellenleiter LWP erreicht.

Das am Ausgang der erfindungsgemäßen Vorrichtung erhaltene Lichtwellenleiterelement kann, vor allem bei entsprechend dicken und starken Außenhüllen AH direkt als Lichtwellenleiter-Kabel Verwendung finden. Es ist aber auch vor allem bei einer etwas schwächeren Außenhülle AH möglich, die dargestellte Anordnung als Ader eines durch einen späteren Verseilvorgang herzustellenden Lichtwellenleiter-Bündels zu benutzen.

1 Figur
9 Patentansprüche

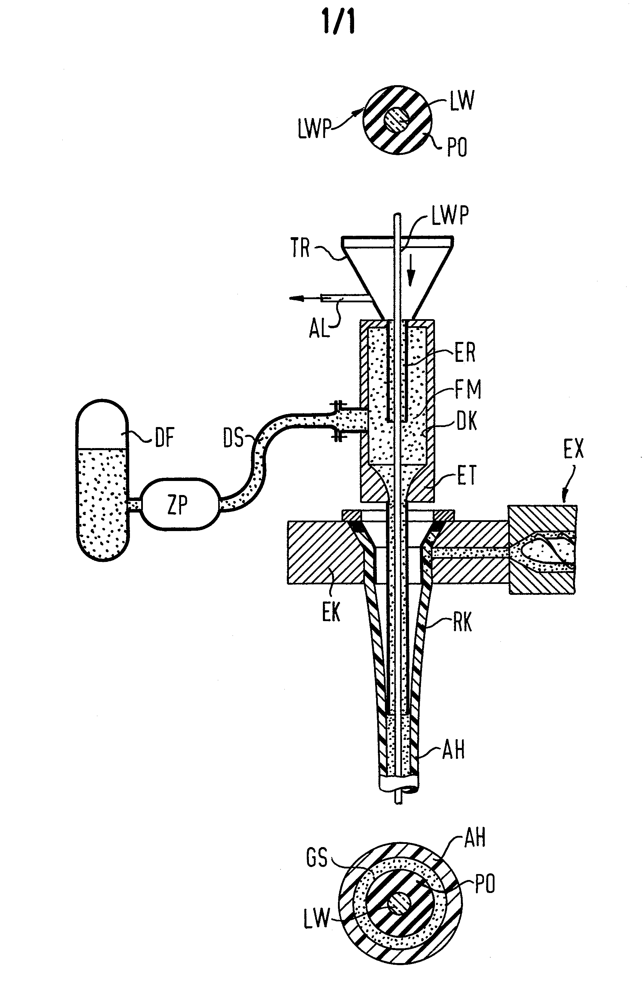

Patentansprüche

1. Vorrichtung zur Herstellung eines Lichtwellenleiterelementes, das aus einem mit einer Polsterschicht (PO) versehenen faserförmigen Lichtwellenleiter (LW), einer nachfolgenden Gleitschicht (GS) besteht und bei der ein Extruder (EX) zur Aufbringung der Außenhülle (AH) vorgesehen ist,
d a d u r c h   g e k e n n z e i c h n e t ,
daß eine Druckkammer (DK) für die Aufbringung der als Gleitschicht (GS) dienenden Füllmasse vorgesehen ist, durch die der gepolsterte Lichtwellenleiter (LWP) hindurchgeführt ist und die am Ausgang mit einem angesetzten Druckrohr (DR) versehen ist, dessen Innenradius um die gewünschte Wandstärke der Gleitschicht (GS) größer gewählt ist als der Radius des gepolsterten Lichtwellenleiters (LWP),
und daß das Druckrohr (DR) etwa bis zum Ende des Reckkegels (RK) des aus dem Extruder (EX) austretenden Materials der Außenhülle (AH) reicht.

2. Vorrichtung nach Anspruch 1, d a d u r c h   g e k e n n z e i c h n e t ,   daß die Druckkammer (DK) am Ausgang mit einem sich auf den Innendurchmesser des Druckrohres (DR) verjüngenden Einlauftrichter (ET) versehen ist.

3. Vorrichtung nach einem der vorhergehenden Ansprüche, d a d u r c h   g e k e n n z e i c h n e t ,   daß die Druckkammer (DK) zylindrisch ausgebildet ist und sich über eine Länge zwischen 1 cm und 5 cm erstreckt.

4. Vorrichtung nach einem der vorhergehenden Ansprüche, d a d u r c h   g e k e n n z e i c h n e t ,   daß die Länge des angesetzten Druckrohres (DR) etwa zwischen 5cm und 10 cm gewählt ist.

5. Vorrichtung nach einem der vorhergehenden Ansprüche, d a d u r c h   g e k e n n z e i c h n e t ,   daß das Druckrohr (DR) und die Druckkammer (DK) senkrecht angeordnet sind.

6. Vorrichtung nach einem der vorhergehenden Ansprüche, d a d u r c h   g e k e n n z e i c h n e t ,   daß die Viskosität der Füllmasse (FM) für die Gleitschicht (GS) so gewählt ist, daß sie nach dem Austritt aus dem Druckrohr (DR) formstabil auf dem gepolsterten Lichtwellenleiter (LWP) gehalten bleibt.

7. Vorrichtung nach einem der vorhergehenden Ansprüche, d a d u r c h   g e k e n n z e i c h n e t ,   daß .die Füllmasse (FM) für die Gleitschicht (GS) einen hochmolekulaten Anteil, einen öligen Anteil und einen thixotropierenden Anteil enthält.

8. Vorrichtung nach einem der vorhergehenden Ansprüche, d a d u r c h   g e k e n n z e i c h n e t ,   daß am Eingang der Druckkammer (DK) ein Einlaufrohr (ER) zur Führung des gepolsterten Lichtwellenleiters (LWP) vorgesehen ist.

9. Vorrichtung nach Anspruch 8,   d a d u r c h   g e - k e n n z e i c h n e t ,   daß das Einlaufrohr (ER) sich in das Innere der Druckkammer (DK) erstreckt, vorzugsweise in einer Länge zwischen 0,5 cm und 2 cm.

0119490

1/1

Europäisches
Patentamt

**EUROPÄISCHER RECHERCHENBERICHT**

0119490

Nummer der Anmeldung

EP 84 10 1683

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | EP-A-0 034 286 (COMPAGNIE LYONNAISE DE TRANSMISSIONS OPTIQUES) * Seite 1, Zeilen 21-36; Seite 2, Zeilen 4-15; Seite 4, Zeilen 1-36; Seite 5, Zeilen 3-5; Ansprüche 1,2,4; Figur 5 * | 1,2,8 | G 02 B 5/16 G 02 B 5/172 C 03 C 25/00 |
| A | | 3,6,7, 9 | |
| Y | GB-A-2 046 471 (TELEPHONE CABLES LTD.) * Seite 1, Zeilen 58-74; Seite 1, Zeilen 113-124; Seite 2, Zeilen 96-126; Ansprüche 1-5,14; Figur 1 * | 1-9 | |
| Y | FR-A-2 375 145 (COMPAGNIE GENERALE D'ELECTRICITE) * Seite 2, Zeilen 2-36; Seite 4, Zeilen 15-18; Ansprüche 1,2; Figur 1 * | 1-9 | RECHERCHIERTE SACHGEBIETE (Int. Cl. ³) G 02 B 5/00 C 03 C 25/00 |
| D,A | DE-A-3 011 009 (SIEMENS AG) * Ansprüche 1,3-5 * | 1,7 | |

--- -/-

Der vorliegende Recherchenbericht wurde für alle Patentansprüche erstellt.

| Recherchenort DEN HAAG | Abschlußdatum der Recherche 29-05-1984 | Prüfer POPINEAU G.J.P. |
|---|---|---|

EPA Form 1503. 03.82

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

Europäisches
Patentamt

EUROPÄISCHER RECHERCHENBERICHT

0119490
Nummer der Anmeldung

EP 84 10 1683

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | PATENTS ABSTRACTS OF JAPAN, Band 7, Nr. 6(P-167)(1151), 11. Januar 1983 & JP - A - 57 165 804 (NIPPON DENSHIN DENWA KOSHA) 13.10.1982 * Zusammenfassung * | 1,7 | |
| A | EP-A-0 033 123 (SIEMENS AG) * Ansprüche 1-4,6,7,9,11,12; Figur 1 * | 1-3,5 | |
| A | EP-A-0 029 198 (SIEMENS AG) * Anspruch 32 * | 1,7 | |
| A | GB-A-1 526 777 (PILKINGTON BROTHERS LTD.) * Seite 1, Zeilen 80-91; Seite 2, Zeilen 76-81; Seite 3, Zeilen 15-25; Ansprüche 13,17,19,21,23; Figur 1 * | 1,7-9 | RECHERCHIERTE SACHGEBIETE (Int. Cl. ³) |
| A | DE-A-3 109 469 (SIEMENS AG) * Seite 5, Zeile 33 - Seite 6, Zeile 28; Figur 1 * | 1 | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 29-05-1984 | POPINEAU G.J.P. |

**Europäisches Patentamt**

# EUROPÄISCHER RECHERCHENBERICHT

0119490

Nummer der Anmeldung

EP 84 10 1683

## EINSCHLÄGIGE DOKUMENTE

Seite 3

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FIFTH EUROPEAN CONFERENCE ON OPTICAL COMMUNICATION, 17.-19. September 1979, ·Seiten 5.6.1 - 5.6.4, Optical Communication Conference, Amsterdam, NL M. SATO et al.: "Double layer silicone coating with double cone nozzle in-line with optical fiber drawing" | | |

-----

RECHERCHIERTE SACHGEBIETE (Int. Cl. ³)

Der vorliegende Recherchenbericht wurde für alle Patentansprüche erstellt.

| Recherchenort | Abschlußdatum der Recherche | Prüfer |
|---|---|---|
| DEN HAAG | 29-05-1984 | POPINEAU G.J.P. |